(19) **Europäisches Patentamt / European Patent Office / Office européen des brevets**

(11) **EP 4 592 542 A1**

(12) **EUROPEAN PATENT APPLICATION**
published in accordance with Art. 153(4) EPC

(43) Date of publication:
**30.07.2025 Bulletin 2025/31**

(21) Application number: **23868161.3**

(22) Date of filing: **19.09.2023**

(51) International Patent Classification (IPC):
***F16C 19/06*** (2006.01)  ***F16C 33/58*** (2006.01)

(52) Cooperative Patent Classification (CPC):
**F16C 19/06; F16C 33/58**

(86) International application number:
**PCT/JP2023/033852**

(87) International publication number:
**WO 2024/063040 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.09.2022 JP 2022150087**
**30.08.2023 JP 2023139936**

(71) Applicant: **NTN Corporation**
**Osaka-shi Osaka 530-0005 (JP)**

(72) Inventors:
• **KAMURA, Naoya**
**Kuwana-shi, Mie 511-0867 (JP)**
• **OKADA, Takahiro**
**Kuwana-shi, Mie 511-0867 (JP)**

(74) Representative: **Bockhorni & Brüntjen**
**Partnerschaft**
**Patentanwälte mbB**
**Agnes-Bernauer-Straße 88**
**80687 München (DE)**

(54) **ROLLING BEARING**

(57)    A rolling bearing including an inner ring (R2), an outer ring (R1), and a plurality of rolling elements (B1 to B6) disposed at a predetermined distance from each other along a circumference of a pitch circle (PC), wherein a relational expression of $\log_{10}t = A \cdot \log_{10}(d \cdot p) + C$ holds, where p denotes the predetermined distance, d denotes a diameter of each of the rolling elements, and t denotes a thickness between an outer ring raceway surface and an outer circumferential surface (Sf3) of the outer ring, and relations of $0.4 \leq A \leq 0.6$ and $-2 \leq C \leq 0$ are satisfied.

FIG.5

```
        START
          │
          ▼   ┌S100
┌─────────────────────────┐
│ OBTAIN VALUE OF CONSTANT A │
└─────────────────────────┘
          │
          ▼   ┌S110
┌─────────────────────────┐
│ OBTAIN MAXIMUM CONTACT     │
│ PRESSURE Pmax              │
└─────────────────────────┘
          │
          ▼   ┌S120
┌─────────────────────────┐
│ DETERMINE VALUE OF CONSTANT C BASED │
│ ON MAXIMUM CONTACT PRESSURE Pmax    │
└─────────────────────────┘
          │
          ▼   ┌S130
┌─────────────────────────┐
│ DETERMINE RELATIONAL EXPRESSION │
│ BASED ON CONSTANT A AND CONSTANT C │
└─────────────────────────┘
          │
          ▼   ┌S140
┌─────────────────────────┐
│ OBTAIN DIAMETER d · ROLLING │
│ ELEMENT DISTANCE p          │
└─────────────────────────┘
          │
          ▼   ┌S150
┌─────────────────────────┐
│ CALCULATE THICKNESS t BASED ON      │
│ RELATIONAL EXPRESSION AND DIAMETER d · │
│ ROLLING ELEMENT DISTANCE p          │
└─────────────────────────┘
          │
          ▼
        RETURN
```

EP 4 592 542 A1

## Description

TECHNICAL FIELD

The present disclosure relates to a rolling bearing.

BACKGROUND ART

Conventionally, damage to an outer ring based on a radial load may occur in a rolling bearing. For example, a crack may form in an outside surface of the outer ring due to fretting wear between the outer ring and a housing. The crack may propagate to an outer ring raceway surface due to a radial load and the like. As a result, peeling may occur to the outer ring raceway surface.

In a rolling bearing of Japanese Patent Laying-Open No. 2004-084698 (PTL 1), the dimension of each part of an outer ring satisfies a predetermined relational expression, to thereby prevent a radial load applied to the outer ring from being concentrated in one portion due to elastic deformation of the outer ring caused by excessively low rigidity of the outer ring. Additionally, in the rolling bearing of Japanese Patent Laying-Open No. 2004-084698 (PTL 1), the dimension of each part of the outer ring satisfies the predetermined relational expression, to thereby prevent plastic deformation of the outer ring beyond elastic deformation caused by excessively high rigidity of the outer ring. That is, in Japanese Patent Laying-Open No. 2004-084698 (PTL 1), the dimension of each part of the outer ring satisfies the predetermined relational expression to ensure appropriate rigidity of the outer ring and prevent damage to the outer ring in terms of rigidity of the outer ring.

CITATION LIST

PATENT LITERATURE

PTL 1: Japanese Patent Laying-Open No. 2004-084698

SUMMARY OF INVENTION

TECHNICAL PROBLEM

The predetermined relational expression for the dimension of each part of the outer ring described in Japanese Patent Laying-Open No. 2004-084698 (PTL 1) includes four dimensions: an outer diameter D of the outer ring; an axial width W of the outer ring; a thickness h between an outer ring raceway surface and an outer circumferential surface of the outer ring; and a diameter Da of a rolling element. As described above, if the predetermined relational expression is satisfied, appropriate rigidity of the outer ring can be ensured, but depending on the values of axial width W of the outer ring and diameter Da of the rolling element, outer diameter D of the outer ring and thickness h may increase. The increase in outer diameter D of the outer ring and thickness h results in a larger size of the rolling bearing.

The present disclosure has been made to solve such a problem, and an object of the present disclosure is to provide a rolling bearing that prevents a crack in an outside surface from propagating to an outer ring raceway surface and suppresses the occurrence of peeling and the like to the outer ring raceway surface, while minimizing the thickness between the outer ring raceway surface and an outer circumferential surface of the outer ring.

SOLUTION TO PROBLEM

A rolling bearing in the present disclosure includes: an inner ring having a raceway surface on its outer circumferential surface; an outer ring disposed outside the inner ring and having a raceway surface on its inner circumferential surface; and a plurality of rolling elements disposed at a predetermined distance from each other along a circumference of a pitch circle lying between the inner ring and the outer ring. In the rolling bearing, a relational expression of $\log_{10} t = A \cdot \log_{10}(d \cdot p) + C$ holds, where p denotes the predetermined distance between the rolling elements, d denotes a diameter of each of the rolling elements, and t denotes a thickness between the outer ring raceway surface and an outer circumferential surface of the outer ring, and relations of $0.4 \leq A \leq 0.6$ and $-2 \leq C \leq 0$ are satisfied.

ADVANTAGEOUS EFFECTS OF INVENTION

According to a rolling bearing in the present disclosure, the value of a constant C in a relational expression is determined based on an allowable value of a maximum contact pressure Pmax between a rolling element and an outer ring raceway surface, so that a crack in an outside surface can be prevented from propagating to the outer ring raceway surface and the occurrence of peeling and the like to the outer ring raceway surface can be suppressed, while the thickness between the outer ring raceway surface and an outer circumferential surface of the outer ring is minimized.

BRIEF DESCRIPTION OF DRAWINGS

Fig. 1 is a plan view of a rolling bearing according to the present embodiment.
Fig. 2 is a cross-sectional view of a rolling element and an outer ring.
Fig. 3 is a first diagram showing, in graphical form, relational expressions for calculating a minimum thickness.
Fig. 4 is a second diagram showing, in graphical form, a relational expression for calculating the minimum thickness.

Fig. 5 is a flowchart for determining a minimum value of the thickness at which a crack that forms in the outer ring does not propagate.

Fig. 6 is a flowchart for determining optimal (d·p) with respect to the thickness.

Fig. 7 is a diagram for illustrating a fatigue experiment for confirming effectiveness of the relational expressions.

Fig. 8 is a diagram of calculation of an appropriate thickness t under each of a condition 1, a condition 3, and a condition 4.

Fig. 9 is a diagram for illustrating an appropriate value of a constant C when a constant A is set to 0.4 under each of condition 1, condition 3, and condition 4.

Fig. 10 is a diagram for illustrating an appropriate value of constant C when constant A is set to 0.6 under each of condition 1, condition 3, and condition 4.

DESCRIPTION OF EMBODIMENTS

Embodiments will be hereinafter described in detail with reference to the drawings. The same or corresponding portions in the drawings are denoted by the same reference characters and description thereof will not be repeated.

[First Embodiment]

Embodiments of the present disclosure will be hereinafter described with reference to the drawings. In the drawings below, the same or corresponding portions are denoted by the same reference numbers and description thereof will not be repeated.

(Configuration of Rolling Bearing 100)

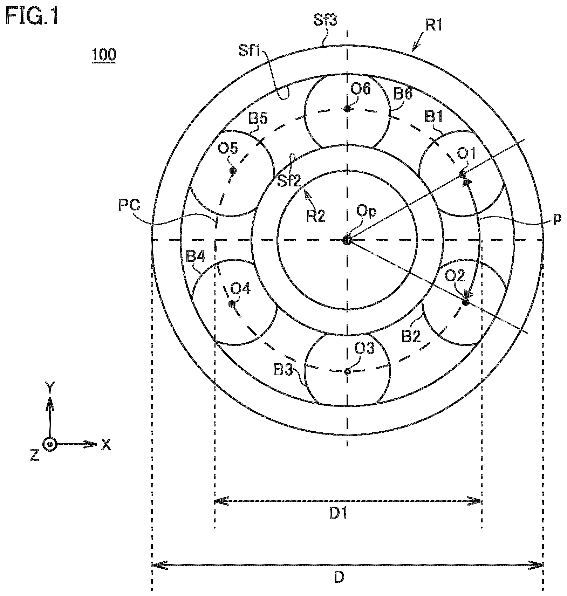

Referring to Fig. 1, a configuration of a rolling bearing 100 according to the present embodiment is described. Fig. 1 is a plan view of rolling bearing 100 according to the present embodiment. Fig. 1 shows rolling bearing 100 when viewed in a plan view from an axial direction of rolling bearing 100.

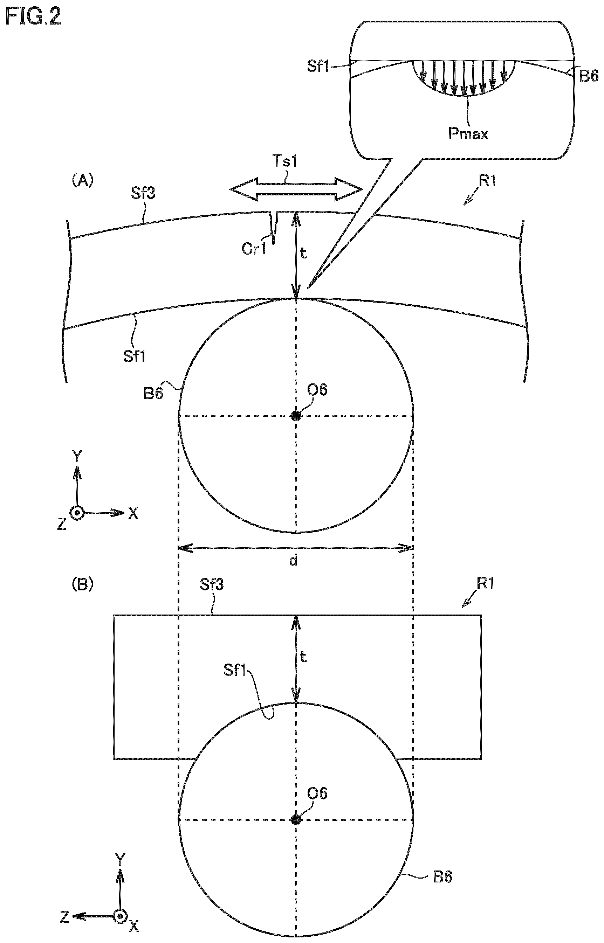

In Figs. 1 and 2, the axial direction of rolling bearing 100 is referred to as a "Z-axis direction." A direction perpendicular to the Z-axis direction is referred to as a "Y-axis direction." A direction perpendicular to the Z-axis direction and the Y-axis direction is referred to as an "X-axis direction."

As shown in Fig. 1, rolling bearing 100 includes an outer ring R1, an inner ring R2, and rolling elements B1 to B6. Each of rolling elements B1 to B6 has a spherical shape. The shape of rolling elements B1 to B6 is not limited to the spherical shape, but may be a cylindrical roller shape, a tapered roller shape, or a needle roller shape.

Each of rolling elements B1 to B6 is interposed between inner ring R2 and outer ring R1 while being held at an equal distance from an adjacent one of the rolling elements by a cage (not shown). That is, rolling elements B1 to B6 are disposed between an outer ring raceway surface Sf1 which is the inner circumferential surface of outer ring R1 and an inner ring raceway surface Sf2 which is the outer circumferential surface of inner ring R2. An outer circumferential surface Sf3 is the outer circumferential surface of outer ring R1. The number of rolling elements is not limited to six, but may be other numbers such as seven, eight, ten, or twenty-seven.

Fig. 1 shows a center point Op, which is a point that overlaps the axis of rolling bearing 100, when outer ring R1 and inner ring R2 are viewed as circles. Fig. 1 also shows center points O1 to O6 of rolling elements B1 to B6, respectively.

An outer diameter D (mm) is the outer diameter of outer ring R1. A pitch circle PC is a circle passing through center points O1 to O6 of rolling elements B1 to B6. A pitch circle diameter D1 (mm) is the diameter of pitch circle PC.

The length of an arc of a sector defined by the center points of adjacent rolling elements and center point Op of rolling bearing 100 is referred to as a rolling element distance p (mm). In other words, the plurality of rolling elements B1 to B6 are disposed at rolling element distance p from each other along a circumference of pitch circle PC.

Fig. 2 is a cross-sectional view showing rolling element B6 and outer ring R1. Fig. 2(A) shows a cross section of an XY plane passing through center point O6 when viewed in a plan view from the side of the positive direction along the Z-axis. Fig. 2(B) shows a cross section of a YZ plane passing through center point O6 when viewed in a plan view from the side of the positive direction along the X-axis.

A diameter d (mm) is the diameter of rolling element B6. As with rolling element B6, other rolling elements B1 to B5 each have diameter d. A thickness t (mm) is a minimum thickness between outer ring raceway surface Sf1 and outer circumferential surface Sf3 of outer ring R1. When thickness t is small, outer diameter D of outer ring R1 of rolling bearing 100 can be decreased to make the size of rolling bearing 100 smaller, but a tensile stress Ts1 (MPa) shown in Fig. 2(A) may increase.

Tensile stress Ts1 occurs by contact between rolling element B6 and outer ring raceway surface Sf1. Fig. 2(A) shows a crack Cr1 as an example crack that has formed in outer ring raceway surface Sf1. Crack Cr1 may propagate toward outer ring raceway surface Sf1 due to the occurrence of tensile stress Ts1 on outer ring raceway surface Sf1.

In the case where only thickness t is changed without changing conditions such as the material of rolling element B6, the outer diameter, and the material of outer ring R1, when thickness t is small, tensile stress Ts1 on outer circumferential surface Sf3 increases. The increase in tensile stress Ts1 may result in crack Cr1 caused by fretting wear and the like propagating to outer ring raceway surface Sf1.

When thickness t is large, on the other hand, the increase in tensile stress Ts1 can be suppressed and crack Cr1 in outer circumferential surface Sf3 can be prevented from propagating to the outer ring raceway surface, but outer diameter D of the outer ring increases accordingly, resulting in a larger size of rolling bearing 100. Rolling bearing 100 is described below which is designed to be able to prevent the propagation of crack Cr1 caused by fretting wear and the like, while minimizing thickness t between outer ring raceway surface Sf1 and outer circumferential surface Sf3.

Based on experimentation, the inventor of the subject case found that when relations below hold for the dimension of each part of rolling bearing 100, it is possible to calculate minimum thickness t at which the crack propagation can be prevented even when a radial load is applied at a maximum contact pressure Pmax within a preset allowable value. In other words, the inventor of the subject case found that when the rolling bearing satisfies relational expressions below, t in the relational expression indicates the minimum thickness at which tensile stress Ts1 does not increase to a value that causes the crack propagation:

(Relational Expressions)

$$\log_{10} t = A \cdot \log_{10}(d \cdot p) + C \ldots (1)$$

$$C = \log_{10} B \ldots (2)$$

When the relational expression (1) above is satisfied, tensile stress Ts1 does not increase to a value that causes the propagation of crack Cr1 that has formed in outer ring R1. In the relational expression (1), p denotes rolling element distance p described above, d denotes diameter d of each of rolling elements B1 to B6, and t denotes minimum thickness t between outer ring raceway surface Sf1 and outer circumferential surface Sf3. In the relational expressions (1) and (2), A, B and C are constants. The relational expression (2) above is an expression which means that constant C is replaced by a constant $\log_{10} B$ in order to express all the terms in the relational expression (1) as logarithms.

Possible ranges of constant A and constant C are determined in advance based on experimentation. Constant A is a value not smaller than 0.4 and not larger than 0.6 ($0.4 \leq A \leq 0.6$). Further, constant A is set to 0.5, for example, from within a range not smaller than 0.4 and not larger than 0.6 based on experimentation.

Constant C ($\log_{10} B$) is a value not smaller than -2 and not larger than 0 ($-2 \leq C \leq 0$). Constant C changes depending on maximum contact pressure Pmax to which outer ring R1 is subjected from the rolling element when a radial load is applied to rolling bearing 100. Maximum contact pressure Pmax is a maximum value of pressure at which outer ring raceway surface Sf1 is pressed by the rolling element at a contact surface between the rolling element and outer ring raceway surface Sf1. An enlarged view of a contact portion between rolling element B6 and outer ring raceway surface Sf1 is shown at the upper right portion of Fig. 2. In the example of Fig. 2, the contact surface between rolling element B6 and outer ring raceway surface Sf1 can be approximated to a two-dimensional plane in the X direction and the Z direction. Maximum contact pressure Pmax is a maximum value of pressure that occurs at the contact surface, as shown in the enlarged view.

In the present embodiment, an allowable value of maximum contact pressure Pmax is determined at a design stage of rolling bearing 100. Rolling bearing 100 is designed such that crack Cr1 does not propagate as long as rolling bearing 100 is subjected to a radial load that does not exceed the allowable value of maximum contact pressure Pmax.

Details of determining minimum thickness t at which the crack does not propagate by determining the allowable value of maximum contact pressure Pmax are described below.

(Calculation of Minimum Thickness t of Rolling Bearing 100)

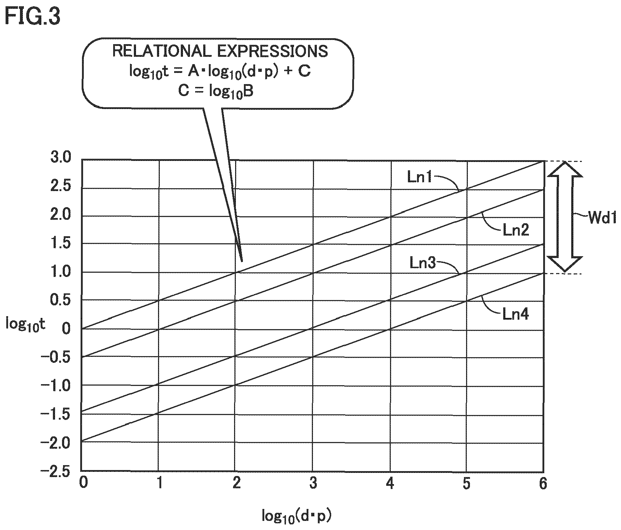

Fig. 3 is a first diagram showing, in graphical form, relational expressions for calculating minimum thickness t. In the graph of Fig. 3, the vertical axis represents $\log_{10} t$ and the horizontal axis represents $\log_{10}(d \cdot p)$.

As shown in Fig. 3, a line Ln1 to a line Ln4 representing the relational expressions described above are illustrated. Fig. 3 represents the relational expression (1) as a straight line. That is, line Ln1 to line Ln4 follow the relational expression (1) described above. Constant A is the slope of each of line Ln1 to line Ln4. Constant C indicates an intersection of each of line Ln1 to line Ln4 and the vertical axis.

Line Ln1 to line Ln4 all have the same slope. That is, constant A is fixed at 0.5 in line Ln1 to line Ln4. On the other hand, constant C changes depending on the allowable value of maximum contact pressure Pmax, and therefore, line Ln1 to line Ln4 change within a range Wd1 shown in Fig. 3. Line Ln1 to line Ln4 indicate the relational expression (1) of rolling bearing 100 using the allowable value of maximum contact pressure Pmax which is predetermined at the design stage.

Relation between the allowable value of maximum contact pressure Pmax and constant C is determined in advance based on experimentation. The designer conducts a fatigue experiment in which maximum contact pressure Pmax is gradually increased for a specific rolling bearing that satisfies the relational expression (1), and calculates an allowable value of maximum contact pressure Pmax at which a crack caused by fretting wear and the like propagates. More specifically, the designer calculates in advance the value of constant C in the specific rolling bearing by setting constant A to 0.5 and measuring the dimensions of other members in the specific rolling bearing that satisfies the relational expression (1).

Further, the designer conducts the fatigue experiment in which maximum contact pressure Pmax is gradually increased for the specific rolling bearing. After crack propagation occurs as maximum contact pressure Pmax is increased, the designer associates a maximum value of maximum contact pressure Pmax at which the crack propagation did not occur with constant C calculated as above. In this manner, the designer creates a table indicating relation between the allowable value of maximum contact pressure Pmax at which the crack propagation does not occur and constant C. As a result, when the designer can obtain the allowable value of maximum contact pressure Pmax that can withstand specifications desired by a customer at the design stage, the designer can obtain the value of constant C at which the crack propagation does not occur. In the table indicating the relation between the allowable value of maximum contact pressure Pmax and constant C, for example, 2330 MPa which is the value of maximum contact pressure Pmax is associated with -0.98 as constant C.

The allowable value of maximum contact pressure Pmax in line Ln1 is a pressure P1 (MPa). The allowable value of maximum contact pressure Pmax in line Ln2 is a pressure P2 (MPa). The allowable value of maximum contact pressure Pmax in line Ln3 is a pressure P3 (MPa). The allowable value of maximum contact pressure Pmax in line Ln4 is a pressure P4 (MPa). Pressure P1 is the highest and pressure P4 is the lowest. The value of each pressure increases in the order of pressure P4, pressure P3, pressure P2, and pressure P1.

As shown in Fig. 3, when the allowable value of maximum contact pressure Pmax is small, $\log_{10}t$ decreases. When $\log_{10}t$ decreases, thickness t decreases. In other words, in the case where the allowable value of maximum contact pressure Pmax is small, it is possible to prevent a crack in the outside surface from propagating to the outer ring raceway surface and suppress the occurrence of peeling and the like to the outer ring raceway surface, at small thickness t. When the allowable value of maximum contact pressure Pmax is large, on the other hand, $\log_{10}t$ increases. When $\log_{10}t$ increases, thickness t increases. In other words, in the case where the allowable value of maximum contact pressure Pmax is large, a crack that has formed in outer ring R1 propagates unless thickness t is increased.

The designer obtains an allowable value of maximum contact pressure Pmax from the specifications of rolling bearing 100 desired by the customer. For example, the designer obtains from the customer parameters including an outer ring outer diameter, an inner ring outer diameter, load capacity, situations in which rolling bearing 100 is expected to be used, and the like. The designer determines an allowable value of required maximum contact pressure Pmax based on the parameters obtained from the customer. Subsequently, using the table indicating the relation between the allowable value of maximum contact pressure Pmax and constant C described above, the designer calculates constant C corresponding to the allowable value of maximum contact pressure Pmax required for the customer from within range Wd1. Thus, the designer can uniquely determine a straight line indicating the relational expression (1) from within range Wd1.

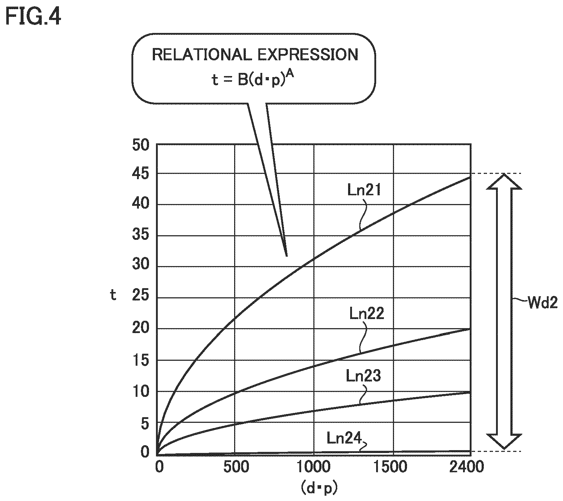

Fig. 4 is a second diagram showing, in graphical form, a relational expression for calculating minimum thickness t. Fig. 4 shows, in graphical form, a relational expression (3) in which log is removed from the relational expression (1) described above. The relational expression (3) shown in Fig. 4 is a variant of the relational expression (2) shown in Fig. 3, with the vertical axis representing thickness t and the horizontal axis representing (d·p). That is, the relational expression (2) shown in Fig. 3 and the relational expression (3) shown in Fig. 4 are essentially the same function, the difference only being that the values represented by the vertical axis and the horizontal axis of the graph have been changed as a result of the transformation of the terms included in the relational expression.

(Relational Expression)

$$t = B(d \cdot p)^A \dots (3)$$

As described above, constant C changes depending on the value of maximum contact pressure Pmax. As shown in the relational expression (2), constant C is $\log_{10}B$. That is, as with constant C, constant B changes depending on the value of maximum contact pressure Pmax. Therefore, as with lines Ln1 to Ln4, a line Ln21 to a line Ln24 change within a range Wd2 shown in Fig. 4. By obtaining an allowable value of maximum contact pressure Pmax based on parameters desired by the customer, the designer can obtain relation between thickness t and a value obtained by multiplying diameter d by rolling element distance p using the same method as that described in Fig. 3. The value obtained by multiplying diameter d by rolling element distance p is hereinafter simply referred to as "(d·p)."

(Design Procedure)

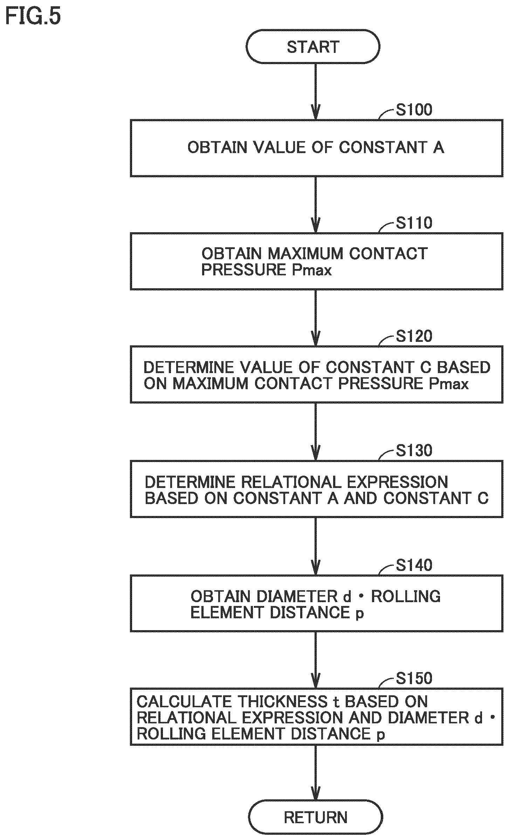

Fig. 5 is a flowchart for determining a minimum value of thickness t at which a crack that forms in outer ring R1 does not propagate. While an entity of the flowchart of Fig. 5 will be hereinafter described as the designer, the flowchart of Fig. 5 may be executed by a general-purpose controller.

The designer obtains a value of constant A (step S100). As described above, constant A is determined from the range not smaller than 0.4 and not larger than 0.6. For example, the designer determines that a suitable value of constant A is 0.5 based on experimentation, and obtains 0.5.

The designer obtains an allowable value of maximum contact pressure Pmax (step S110). For example, the designer obtains an allowable value of maximum contact pressure Pmax. The designer determines constant C based on the allowable value of maximum contact pressure Pmax obtained in step S110 (step S120). As described above, constant C and the allowable value of maximum contact pressure Pmax are associated with each other based on experimentation.

The designer determines a relational expression based on constant A and constant C. That is, in the example of Fig. 3, the designer determines a relational expression from within range Wd1. Thus, in the example of Fig. 3, the designer can obtain relation between $\log_{10}t$ and $\log_{10}(d \cdot p)$.

Subsequently, the designer obtains $(d \cdot p)$ (step S140). The designer obtains $(d \cdot p)$ based on parameters of rolling bearing 100 desired by the customer for diameter d and rolling element distance p. For example, as with the allowable value of maximum contact pressure Pmax, the designer determines the number, size and the like of the rolling elements depending on the parameters desired by the customer, and calculates $(d \cdot p)$. The designer calculates thickness t using the relational expression determined in step S130 and $(d \cdot p)$ obtained in step S140.

That is, the designer calculates thickness t by providing $(d \cdot p)$ to the relational expression shown in Fig. 3 or 4. As described above, thickness t that satisfies the relational expression (1) or (3) is the minimum thickness at which shear stress $\tau$ is suppressed to a value at which a crack does not form. Thus, in rolling bearing 100 in the present embodiment, it is possible to prevent a crack that has formed in outer circumferential surface Sf3 of outer ring R1 from propagating to outer ring raceway surface Sf1 and suppress the occurrence of peeling and the like to outer ring raceway surface Sf1, while minimizing thickness t.

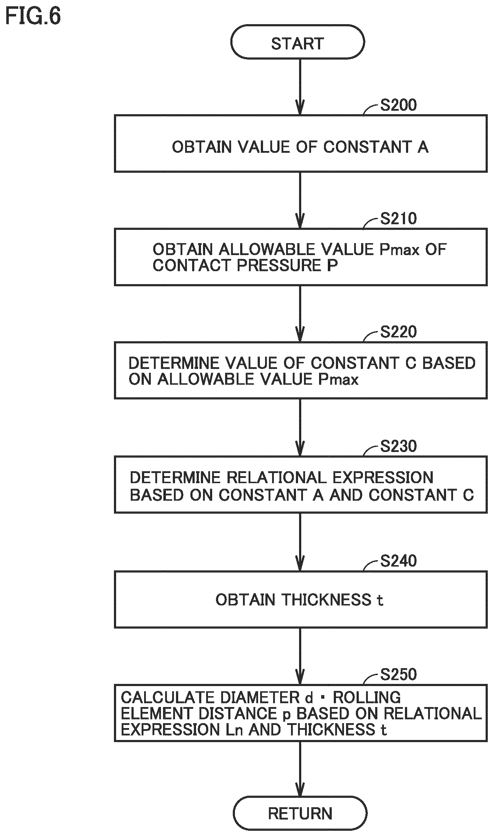

Fig. 6 is a flowchart for determining optimal $(d \cdot p)$ with respect to thickness t. Step S200 to step S230 in Fig. 6 are the same processes as step S100 to step S130 in Fig. 5, and description thereof will therefore not be repeated.

In step S240, the designer obtains thickness t (step S240). In Fig. 6, the designer can determine optimal $(d \cdot p)$ at specific thickness t. In the case where the customer desires to design a rolling bearing with thickness t of 10 mm, the designer can calculate a value of $(d \cdot p)$ required to prevent the crack propagation at thickness t of 10 mm using the flowchart of Fig. 6. The designer calculates $(d \cdot p)$ using the relational expression determined in step S230 and thickness t obtained in step S240.

That is, the designer calculates $(d \cdot p)$ by providing thickness t to the relational expression shown in Fig. 3 or 4. As described above, $(d \cdot p)$ that satisfies the relational expression (1) or (3) is $(d \cdot p)$ at minimum thickness t at which tensile stress Ts1 is suppressed to a value at which a crack does not form. Thus, in rolling bearing 100 in the present embodiment, it is possible to estimate, using thickness t, a combination of diameter d and rolling element distance p that can prevent a crack that has formed in outer circumferential surface Sf3 of outer ring R1 from propagating to outer ring raceway surface Sf1 and suppress the occurrence of peeling and the like to outer ring raceway surface Sf1.

(Fatigue Experiment for Confirming Effectiveness of Relational Expressions (1) to (3))

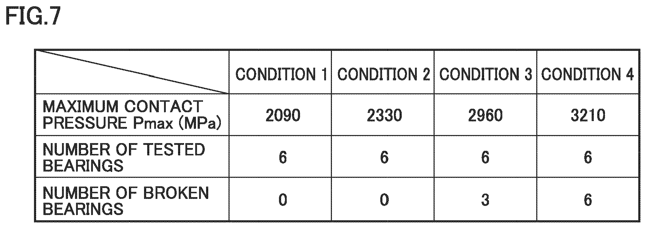

Fig. 7 is a diagram for illustrating a fatigue experiment for confirming effectiveness of the relational expressions (1) to (3). An example of calculating thickness t using the relational expression (1) is described below. When constant A is 0.5, the allowable value of maximum contact pressure Pmax is 2330 MPa, constant C associated with the allowable value of maximum contact pressure Pmax is -0.98, and $\log_{10}(d \cdot p)$ is 1.965, the designer calculates thickness t to be 1.006 mm ($\log_{10}t = 0.025$) using the relational expression (1). Rolling bearing 100 in which $\log_{10}(d \cdot p)$ is 1.965 and thickness t is 1.006 mm is hereinafter referred to as a "rolling bearing subject to experimentation." An example of preparing twenty-four rolling bearings 100 subject to experimentation and conducting the fatigue experiment is described below.

As shown by a condition 1 to a condition 4 in Fig. 7, rolling bearings 100 subject to experimentation were subjected to the fatigue experiment with different allowable values of maximum contact pressure Pmax. Six rolling bearings 100 were used in the experiment under each of condition 1 to condition 4. In the example of Fig. 7, inner ring R2 of rolling bearing 100 was rotated and fatigue corresponding to $10^8$ times of loading was applied to outer ring R1, with the addition of 2090 MPa, 2330 MPa, 2960 MPa, and 3210 MPa as allowable values of maximum contact pressure Pmax under condition 1, condition 2, condition 3, and condition 4, respectively.

The number of tested bearings is the number of rolling bearings 100 that were used for the fatigue test. As a result of the fatigue experiment, none of six rolling bearings 100 were damaged under condition 1 and condition 2, as shown in Fig. 7. On the other hand, three of six rolling bearings 100 were damaged under condition 3. Further, all of six rolling bearings 100 were damaged under condition 4.

From this experiment, it can be concluded, in the case where constant A is set to 0.5, constant C is set to -0.98, and rolling bearing 100 subject to experimentation in which $\log_{10}(d \cdot p)$ is 1.965 and thickness t is 1.006 mm ($\log_{10}t = 0.025$) is used, that outer ring R1 may be damaged when maximum contact pressure Pmax exceeds 2330 MPa.

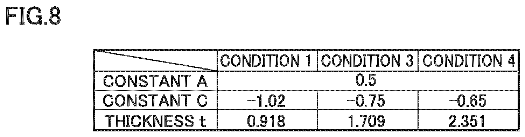

Fig. 8 is a diagram of calculation of appropriate thickness t under each of condition 1, condition 3, and condition 4. As shown in Fig. 8, constant C was reset based on each maximum contact pressure Pmax added in the experiment of Fig. 7. Then, the minimum value of thickness t under each of condition 1, condition 3, and condition 4 was calculated again by application of relational expression 1.

In this manner, in rolling bearing 100 of the present embodiment, it is possible to prevent a crack that has formed in outer circumferential surface Sf3 of outer ring R1 due to fretting wear and the like from propagating to outer ring raceway surface Sf1 and suppress the occurrence of peeling and the like to outer ring raceway surface Sf1, while minimizing thickness t.

(As to Constant C)

In the example described above, constant C has the range of -2 ≤ C ≤ 0 and is determined depending on the allowable value of maximum contact pressure Pmax. However, constant C may have a range of -2 ≤ C ≤ -0.32. Additionally, as with constant A, constant C may be uniquely determined in advance based on experimentation regardless of the allowable value of maximum contact pressure Pmax. When constant C is small, thickness t decreases. If constant C is smaller than -2, in rolling bearing 100, thickness t required to function as rolling bearing 100 cannot be ensured. When constant C is smaller than -2, thickness t may be less than 0.1 mm, for example. In the present embodiment, therefore, constant C is set to a value not smaller than -2.

When constant C is large, on the other hand, thickness t increases. When constant C is larger than 0, in rolling bearing 100, thickness t may increase to exceed the thickness required to function as rolling bearing 100. When constant C is larger than 0, thickness t may be more than 50 mm, for example. In the present embodiment, therefore, constant C is set to a value not larger than 0.

In another embodiment, constant C may be -0.32 or a value smaller than -0.32. That is, the upper limit of constant C may be set to -0.32. In the case where the upper limit of constant C is set to -0.32, the allowable value of maximum contact pressure Pmax can be set to 5000 MPa, which may be typically set as the allowable value of maximum contact pressure Pmax in rolling bearing 100. That is, the value of -0.32 of constant C is associated with 5000 MPa as the allowable value of maximum contact pressure Pmax. Further, even in the case where the upper limit of constant C is set to -0.32, in rolling bearing 100, it is possible to prevent a crack that has formed in outer circumferential surface Sf3 of outer ring R1 from propagating to outer ring raceway surface Sf1 and suppress the occurrence of peeling and the like to outer ring raceway surface Sf1, while minimizing thickness t.

(Second Embodiment)

Rolling bearing 100 that satisfies the relations of 0.4 ≤ A ≤ 0.6 and -2 ≤ C ≤ 0 in the relational expression (1) has been described above. Additionally, in the first embodiment, constant C has been described as being determined based on the allowable value of maximum contact pressure Pmax desired by the customer. An example of determining constant C depending on the value of constant A instead of the allowable value of maximum contact pressure Pmax is described below.

In the first embodiment, constant A is set to 0.5. In the relational expression (1), constant A is multiplied by $\log_{10}(d \cdot p)$. Therefore, if a value smaller than 0.5 is set as the value of constant A, $(d \cdot p)$ has reduced effect on thickness t. More specifically, in a second embodiment, in the case where the value of diameter d is changed so that the value of $\log_{10}(d \cdot p)$ is larger than 1.965 described in the first embodiment, thickness t is larger than 1.006 mm described in the first embodiment. At this time, if constant A is set to a value smaller than 0.5, the rate of change of thickness t decreases, and if constant A is set to a value larger than 0.5, the rate of change of thickness t increases.

As described above, constant A may be within the range not smaller than 0.4 and not larger than 0.6. The designer may design the rolling bearing by decreasing or increasing constant A in consideration of the rate of change of thickness t. In the second embodiment, by setting the upper limit value of constant C to -0.12 when constant A is decreased to the minimum value of 0.4, and setting the upper limit value of constant C to -0.51 when constant A is increased to the maximum value of 0.6, it is possible to design rolling bearing 100 having equal resistance to fretting wear regardless of the value of constant A.

These upper limit values of "-0.12" and "-0.51" of constant C were determined using the rolling bearings subject to the fatigue experiment in Fig. 7. In the case where constant C is determined when constant A is changed so as to obtain the same size as that of the bearing subject to experimentation described above, constant C is "-0.12" when constant A is set to 0.4. Constant C is "-0.51" when constant A is set to 0.6. That is, by setting constant C to "-0.12" when constant A is set to 0.4, it is possible to design a bearing having a size that leads to a smaller number of broken bearings. Likewise, by setting constant C to "-0.51" when constant A is set to 0.6, it is possible to design a bearing having a size that leads to a smaller number of broken bearings.

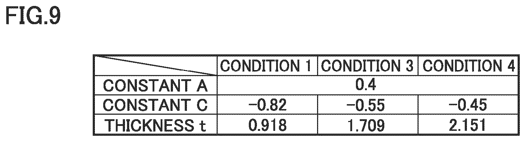

Fig. 9 is a diagram for illustrating an appropriate value of constant C when constant A is set to 0.4 under each of condition 1, condition 3, and condition 4. As described in Fig. 8 of the first embodiment, when relational expression 1 is applied and constant A is set to 0.5 and constant C is set to -0.98, optimal thickness t is 0.918 mm under condition 1, 1.709 mm under condition 3, and 2.151 mm under condition 4. In the case where constant A is changed from 0.5 to 0.4 while optimal thickness t and the value of log10(d·p) (1.965) under each condition described in Fig. 8 are maintained, constant C is -0.82 under condition 1, -0.55 under condition 3, and -0.45 under condition 4, as shown in Fig. 9. In the case where constant A is changed from 0.5 to 0.4 and thickness t and the value of (d·p) are maintained in this manner, the value of constant C under each condition is larger than when constant A is set to 0.5. In the second embodiment, in the case where constant A is set to the minimum value of 0.4, the upper limit value of constant C is increased from -0.32 described above to -0.12.

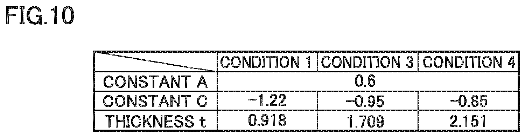

Fig. 10 is a diagram showing an appropriate value of constant C when constant A is set to 0.6 under each of condition 1, condition 3, and condition 4. In the case where constant A is changed from 0.5 to 0.6 while optimal thickness t and the value of log10(d·p) (1.965) under each condition described in Fig. 8 are maintained, constant C is -1.22 under condition 1, -0.95 under condition 3, and -0.85 under condition 4, as shown in Fig. 10. In the case where constant A is set to 0.6 and thickness t and the value of (d·p) are maintained in this manner, constant C is smaller than when constant A is set to 0.5. In the second embodiment, in the case where constant A is set to the minimum value of 0.6, the upper limit value of constant C is decreased from -0.32 to -0.51.

In this manner, by setting constant C to -0.12 in the case where constant A is set to the minimum value of 0.4, and setting constant C to -0.51 in the case where constant A is set to the maximum value of 0.6, it is possible to design rolling bearing 100 having an equal size, that is, having equal resistance to fretting wear, even when the value of constant A is changed. The method of determining constant C may be a combination of the method of determination based on the allowable value of maximum contact pressure Pmax described in the first embodiment and the method of determination based on the value of constant A described in the second embodiment.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

REFERENCE SIGNS LIST

R1 outer ring; 100 rolling bearing; A, B, C constant; B1 to B6 rolling element; D outer diameter; D1 pitch circle diameter; Ln1 to Ln4, Ln21 to Ln24 line; O1 to O6, Op center point; P contact pressure; P1 to P4 pressure; PC pitch circle; Pmax maximum contact pressure; R2 inner ring; Sf1 outer ring raceway surface; Sf2 inner ring raceway surface; Sf3 outer circumferential surface; d diameter; t thickness.

**Claims**

1. A rolling bearing comprising:

   an inner ring having an inner ring raceway surface on its outer circumferential surface;
   an outer ring disposed outside the inner ring and having an outer ring raceway surface on its inner circumferential surface; and
   a plurality of rolling elements disposed at a predetermined distance from each other along a circumference of a pitch circle lying between the inner ring and the outer ring, wherein
   a relational expression of $\log_{10} t = A \cdot \log_{10}(d \cdot p) + C$ holds, where p denotes the predetermined distance, d denotes a diameter of each of the rolling elements, and t denotes a thickness between the outer ring raceway surface and an outer circumferential surface of the outer ring, and
   relations of $0.4 \leq A \leq 0.6$ and $-2 \leq C \leq 0$ are satisfied.

2. The rolling bearing according to claim 1, wherein relations of A = 0.5 and $-2 \leq C \leq -0.32$ are satisfied.

3. The rolling bearing according to claim 1, wherein relations of A = 0.4 and $-2 \leq C \leq -0.12$ are satisfied.

4. The rolling bearing according to claim 1, wherein relations of A = 0.6 and $-2 \leq C \leq -0.51$ are satisfied.

FIG.1

FIG.2

(A)

Sf1 B6

Pmax

Ts1

Sf3 R1

Cr1

t

Sf1

B6 O6

Y

Z X

d

(B) Sf3 R1

Sf1

t

O6

Y

Z X

B6

FIG.3

RELATIONAL EXPRESSIONS
$\log_{10}t = A \cdot \log_{10}(d \cdot p) + C$
$C = \log_{10}B$

FIG.4

RELATIONAL EXPRESSION
$t = B(d \cdot p)^A$

FIG.5

```
                    ┌──────────────┐
                    │    START     │
                    └──────┬───────┘
                           │              ⌐S100
              ┌────────────▼────────────────┐
              │  OBTAIN VALUE OF CONSTANT A  │
              └────────────┬────────────────┘
                           │              ⌐S110
              ┌────────────▼────────────────┐
              │  OBTAIN MAXIMUM CONTACT      │
              │  PRESSURE Pmax               │
              └────────────┬────────────────┘
                           │              ⌐S120
              ┌────────────▼─────────────────────┐
              │  DETERMINE VALUE OF CONSTANT C BASED │
              │  ON MAXIMUM CONTACT PRESSURE Pmax    │
              └────────────┬─────────────────────┘
                           │              ⌐S130
              ┌────────────▼─────────────────────┐
              │  DETERMINE RELATIONAL EXPRESSION     │
              │  BASED ON CONSTANT A AND CONSTANT C  │
              └────────────┬─────────────────────┘
                           │              ⌐S140
              ┌────────────▼────────────────┐
              │  OBTAIN DIAMETER d ・ ROLLING │
              │  ELEMENT DISTANCE p          │
              └────────────┬────────────────┘
                           │              ⌐S150
              ┌────────────▼──────────────────────────┐
              │  CALCULATE THICKNESS t BASED ON          │
              │  RELATIONAL EXPRESSION AND DIAMETER d ・  │
              │  ROLLING ELEMENT DISTANCE p              │
              └────────────┬──────────────────────────┘
                           │
                    ┌──────▼───────┐
                    │    RETURN     │
                    └──────────────┘
```

FIG.6

```
                    ┌─────────────┐
                    │    START    │
                    └──────┬──────┘
                           │
                           ▼        ╭─S200
        ┌──────────────────────────────────────┐
        │     OBTAIN VALUE OF CONSTANT A         │
        └──────────────────┬─────────────────────┘
                           │
                           ▼        ╭─S210
        ┌──────────────────────────────────────┐
        │  OBTAIN ALLOWABLE VALUE Pmax OF        │
        │  CONTACT PRESSURE P                    │
        └──────────────────┬─────────────────────┘
                           │
                           ▼        ╭─S220
        ┌──────────────────────────────────────┐
        │  DETERMINE VALUE OF CONSTANT C BASED   │
        │  ON ALLOWABLE VALUE Pmax               │
        └──────────────────┬─────────────────────┘
                           │
                           ▼        ╭─S230
        ┌──────────────────────────────────────┐
        │  DETERMINE RELATIONAL EXPRESSION       │
        │  BASED ON CONSTANT A AND CONSTANT C    │
        └──────────────────┬─────────────────────┘
                           │
                           ▼        ╭─S240
        ┌──────────────────────────────────────┐
        │        OBTAIN THICKNESS t              │
        └──────────────────┬─────────────────────┘
                           │
                           ▼        ╭─S250
        ┌──────────────────────────────────────┐
        │ CALCULATE DIAMETER d · ROLLING         │
        │ ELEMENT DISTANCE p BASED ON RELATIONAL │
        │ EXPRESSION Ln AND THICKNESS t          │
        └──────────────────┬─────────────────────┘
                           │
                           ▼
                    ┌─────────────┐
                    │   RETURN    │
                    └─────────────┘
```

FIG.7

| | CONDITION 1 | CONDITION 2 | CONDITION 3 | CONDITION 4 |
|---|---|---|---|---|
| MAXIMUM CONTACT PRESSURE Pmax (MPa) | 2090 | 2330 | 2960 | 3210 |
| NUMBER OF TESTED BEARINGS | 6 | 6 | 6 | 6 |
| NUMBER OF BROKEN BEARINGS | 0 | 0 | 3 | 6 |

FIG.8

|  | CONDITION 1 | CONDITION 3 | CONDITION 4 |
|---|---|---|---|
| CONSTANT A | 0.5 | | |
| CONSTANT C | −1.02 | −0.75 | −0.65 |
| THICKNESS $t$ | 0.918 | 1.709 | 2.351 |

FIG.9

| | CONDITION 1 | CONDITION 3 | CONDITION 4 |
|---|---|---|---|
| CONSTANT A | 0.4 | | |
| CONSTANT C | −0.82 | −0.55 | −0.45 |
| THICKNESS t | 0.918 | 1.709 | 2.151 |

FIG.10

| | CONDITION 1 | CONDITION 3 | CONDITION 4 |
|---|---|---|---|
| CONSTANT A | 0.6 | | |
| CONSTANT C | −1.22 | −0.95 | −0.85 |
| THICKNESS t | 0.918 | 1.709 | 2.151 |

## INTERNATIONAL SEARCH REPORT

International application No.

**PCT/JP2023/033852**

| A. | CLASSIFICATION OF SUBJECT MATTER |
|---|---|

*F16C 19/06*(2006.01)i; *F16C 33/58*(2006.01)i
FI:    F16C33/58; F16C19/06

According to International Patent Classification (IPC) or to both national classification and IPC

| B. | FIELDS SEARCHED |
|---|---|

Minimum documentation searched (classification system followed by classification symbols)

F16C19/06; F16C33/58

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2013/011963 A1 (NSK LTD.) 24 January 2013 (2013-01-24)<br>paragraphs [0001]-[0012], [0023], [0082]-[0095], fig. 6A, 7A | 1-4 |
| A | JP 2004-84698 A (NSK LTD.) 18 March 2004 (2004-03-18)<br>paragraphs [0017]-[0019], fig. 1-3 | 1-4 |
| A | US 2020/0096042 A1 (SCHAEFFLER TECHNOLOGIES AG & CO. KG) 26 March 2020 (2020-03-26)<br>paragraphs [0027], [0028], fig. 4 | 1-4 |

☐ Further documents are listed in the continuation of Box C.      ☑ See patent family annex.

| | |
|---|---|
| *     Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **17 October 2023** | **31 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/033852**

| Patent document cited in search report | | | Publication date (day/month/year) | Patent family member(s) | | | Publication date (day/month/year) |
|---|---|---|---|---|---|---|---|
| WO | 2013/011963 | A1 | 24 January 2013 | US 9115759 B2 column 9, line 44 to column 12, line 13, fig. 6A, 7A CN 202926873 U paragraphs [0086]-[0104], fig. 6A, 7A | | | |
| JP | 2004-84698 | A | 18 March 2004 | US 2005/0226546 A1 paragraphs [0078], [0079], fig. 5-7 WO 2004/010016 A1 EP 1541883 A1 CN 1671974 A | | | |
| US | 2020/0096042 | A1 | 26 March 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004084698 A